# FASCICULE DE BREVET EUROPEEN

(11) **EP 2 669 566 B1**
(45) Date de publication et mention de la délivrance du brevet: **27.03.2019**
(21) Numéro de dépôt: 13305739.8
(22) Date de dépôt: 03.06.2013
(51) Int. Cl.: F16M 11/22, F16M 13/02

(54) **Support d'écran**
Träger für Bildschirm
Screen support

(30) Priorité: 01.06.2012 FR 1255135
(43) Date de publication de la demande: 04.12.2013
(73) Titulaire: Erard, 38230 Chavanoz (FR)
(72) Inventeur: Bonnemere, Patrick, 69004 Lyon (FR)
(74) Mandataire: Cabinet Laurent & Charras

(56) Documents cités:
- EP-A2- 2 236 902
- DE-U1- 29 700 829
- US-A- 5 642 820
- US-B1- 6 983 853

## Description

### DOMAINE TECHNIQUE

La présente invention concerne un support d'écran plat ou similaire permettant de supporter un écran à proximité d'un mur sans nécessiter le percement de ce dernier.

### ART ANTERIEUR

Il est bien connu que, au cours de ces dernières années, les écrans plats ont largement supplanté les écrans cathodiques particulièrement encombrants. Ces écrans plats, tels que les écrans plasmas, LCD ou similaire, de télévision ou d'ordinateur notamment présentent un faible encombrement et peuvent ainsi être fixés directement sur un support vertical tel qu'un mur ou sur une colonne verticale d'un mobilier adapté au multimédia.

A cet effet, on connaît déjà de nombreux moyens de fixation de ce type d'écran sur un mur. Ces moyens de fixation sont usuellement constitués d'un cadre ou d'une platine support apte à être fixé sur la face arrière de l'écran plat et comportant des crochets coopérant avec une barre de fixation horizontale préalablement fixée au mur.

Certains de ces moyens de fixation comportent des moyens de réglage en hauteur de l'écran.

C'est le cas notamment de la demande de brevet français FR 2 872 871 qui décrit un profilé en C horizontal se fixant contre un mur ou une colonne support et deux profilés en C verticaux se fixant à l'arrière de l'écran plat, à chacune des extrémités, comportant une série d'encoches formant crochet, permettant l'encastrement dans le profilé en C horizontal. Le profilé en C horizontal a une forme d'escalier dont la largeur de la base est identique à la largeur du sommet du crochet formé par les encoches des profilés en C verticaux permettant un verrouillage d'inclinaison. Les encoches des profilés en C sont décalées longitudinalement de la même de distance l'une par rapport à l'autre. Le profilé comporte à chacune de ses extrémités un ergot formant butée transversale. Les deux profilés en C comportent des trous oblongs suivant l'axe longitudinal permettant la fixation de l'écran plat.

On connaît également la demande de brevet européen EP 2 083 208 qui décrit un appareil destiné à fixer un écran sur un mur. Ledit appareil comprend un élément mural à fixer au mur et un élément de soutien à fixer à l'écran, l'élément de soutien étant pourvu d'un premier élément en forme de crochet qui peut être fixé en fonctionnement à un premier élément récepteur prévu dans l'élément mural. L'élément de soutien est pourvu par rapport au premier élément en forme de crochet d'un second élément en forme de crochet qui peut être déplacé contre une résistance en direction de l'élément en forme de crochet, le second élément en forme de crochet se trouvant en engagement avec le second élément récepteur prévu dans l'élément mural en fonctionnement contre une résistance.

On connait également la demande DE 297 00 829 qui décrit un support pour appareil HI-FI ou TV. Le support est constitué d'une colonne verticale munie à son extrémité inférieure d'un pied et replié à son extrémité supérieure pour former un bras horizontal muni à son extrémité libre d'une platine de fixation. La colonne est munie d'éléments de support en forme générale de « U », dont la base comprend une bride pour le montage du support sur la colonne tubulaire.

Ce type de dispositif présente l'inconvénient de nécessiter des percements du mur, laissant des marques sur le mur.

Afin de palier cet inconvénient, on a déjà imaginé des supports d'écran ne nécessitant pas de percement du mur.

C'est le cas notamment de la demande de brevet américain US 2008/0237412, la demande de brevet japonais JP2004229051, ou la demande de brevet européen EP 2 236 902.

La demande de brevet américain US 2008/0237412 décrit un support d'écran comprenant une base comportant des roulettes, une colonne s'étendant verticalement depuis la base, et un élément de support prévu à l'extrémité supérieure de la colonne pour supporter l'écran. Un poids est fixé de manière amovible à la base afin d'améliorer la stabilité de la base de sorte que le dispositif d'affichage 30 peut être supporté de manière stable.

De manière similaire, la demande de brevet japonais JP2004229051 décrit un support d'écran comprenant une base en forme de X, une potence s'étendant verticalement depuis la partie centrale de la base et des moyens de fixation de l'écran à l'extrémité supérieure de la colonne.

Ce type de dispositif a pour principal inconvénient de présenter un grand encombrement de sorte qu'il est difficile de l'installer dans une pièce telle qu'un salon ou une chambre par exemple.

Dans des domaines techniques différents de l'invention, des supports sont connus par exemple des documents US 5 642 820 et US 6 983 853.

Le document US 5 642 820 décrit une structure de support de stockage pour table, adaptée pour être posée sur un plancher et être appuyée sur une paroi. La structure de support comprend un piètement constitué d'un tube muni à ses extrémités libres de manchons antidérapants, un premier élément formant colonne s'étendant verticalement et muni à son extrémité supérieure d'un patin antidérapant, et un second élément incliné, à environ 45° avec la colonne verticale et s'étendant depuis l'extrémité inférieure de ladite colonne jusqu'à la partie médiane du piètement. L'extrémité supérieure comporte, par ailleurs, un bras s'étendant horizontalement et comportant à son extrémité libre des moyens de support d'un objet, tel qu'un vélo, par exemple. La longueur du bras est inférieure à l'écartement entre le piètement et la colonne, de sorte que les centres de gravité de l'objet supporté à l'extrémité dudit bras soient situés entre les points d'appui du piètement au sol et le point d'appui de la colonne contre le mur.

Le document US 6 983 853 décrit un dispositif de support de stockage modulaire afin de supporter des articles suspendus au-dessus d'un plancher. Ledit dispositif est composé d'une colonne tubulaire repliée à son extrémité supérieure et munie d'un manchon antidérapant. L'extrémité inférieure de la colonne est solidaire d'un piètement en forme générale de « U » dont les extrémités libres des branches sont repliées vers le bas et munies de manchons antidérapants.

### EXPOSE DE L'INVENTION

L'un des buts de l'invention est donc de remédier aux inconvénients ci-dessus, en proposant un support d'écran de conception simple et peu onéreuse et permettant de supporter un écran à proximité d'un mur sans nécessiter de percement de ce dernier.

A cet effet et conformément à l'invention, il est proposé un support d'écran selon la revendication 1.

Contrairement aux supports d'écran de l'art antérieur, le support d'écran suivant l'invention ne nécessite pas de percer des trous dans les murs et présente une grande stabilité.

Accessoirement, la colonne est constituée d'au moins deux parties, une partie inférieure recourbée solidarisée au piètement, et une partie supérieure solidaire de l'extrémité supérieure de la partie médiane.

Afin d'assurer une parfaite rigidité de la colonne, notamment lorsqu'un grand écran plat est fixé sur ladite colonne, le support suivant l'invention comporte un raidisseur solidaire de la face arrière de la colonne.

Ledit raidisseur consiste, de préférence, en une pièce profilée en forme de U. Par ailleurs, le dispositif comporte avantageusement un capot rectangulaire venant coiffer le raidisseur pour former une goulotte dans laquelle sont aptes à passer les câbles électriques, vidéos, ou similaires de sorte que lesdits câbles électriques ne soient pas visibles.

De plus, le patin adhérent consiste de préférence en un patin obtenu dans un gel élastomère, ou polyuréthane (PU), ou polychlorure de vinyle (PVC), ou silicone et les patins anti-glisse consistent dans des patins en élastomère.

Afin de permettre un réglage de la hauteur de l'écran sur la colonne du support suivant l'invention, ce dernier comporte avantageusement des paires de trous espacés à intervalles régulier le long de ladite colonne, ces paires de trous étant destinées à recevoir des vis de fixation des moyens de fixation de l'écran sur la colonne.

### DESCRIPTION SOMMAIRE DES FIGURES

D'autres avantages et caractéristiques ressortiront mieux de la description qui va suivre de plusieurs variantes d'exécution, données à titre d'exemples non limitatifs, du support d'écran suivant l'invention, en référence aux dessins annexés sur lesquels :
- La figure 1 est une vue en perspective éclatée du support d'écran suivant l'invention,
- La figure 2 est une vue de face du support d'écran suivant l'invention,
- La figure 3 est une vue arrière du support d'écran suivant l'invention,
- La figure 4 est une vue de côté du support d'écran suivant l'invention prenant appui sur un mur.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas tracées à l'échelle.

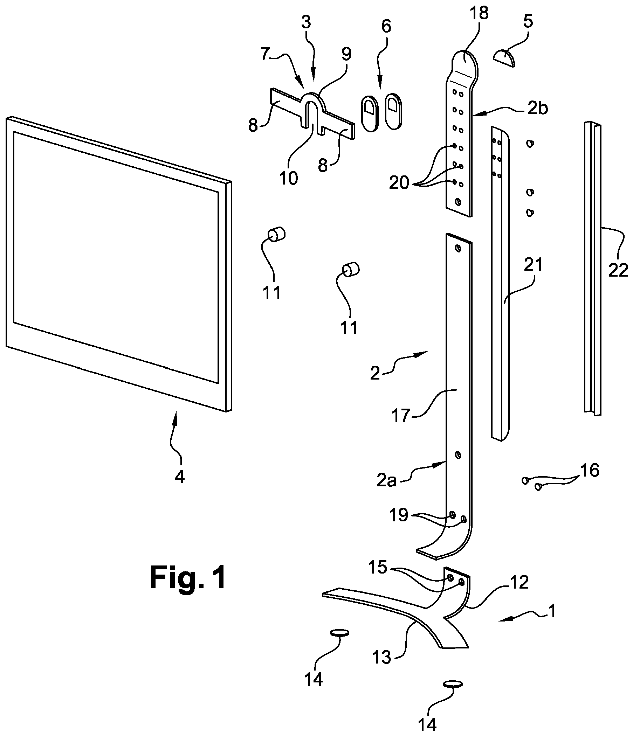

En référence à la figure 1, le support d'écran suivant l'invention est constitué d'un piètement (1) comportant au moins deux appuis au sol, comme il sera détaillé un peu plus loin, et d'une colonne (2) dont l'extrémité supérieure comporte sur sa face avant s'étendant au droit du piètement (1) des moyens de fixation (3) de l'écran plat (4) et sur sa face arrière un patin adhérent (5) apte à prendre appui sur une paroi verticale. Ledit patin adhérent consiste en un patin obtenu dans un gel élastomère, ou polyuréthane (PU), ou polychlorure de vinyle (PVC), ou silicone ou dans tout autre matériau adhérent similaire bien connu.

Les moyens de fixation (3) de l'écran plat (4) consistent par exemple dans un dispositif de fixation plat tel que décrit dans la demande de brevet français FR 2 957 993 de la demanderesse.

De préférence, lesdits moyens de fixation (3) sont par exemple constitués d'une platine (6) ou d'un cadre de fixation apte à être solidarisé sur un support et comportant sur sa face avant des moyens de solidarisation d'un cintre support (7) destiné à être fixé sur la face arrière de l'écran plat (4), ledit cintre support (7) comportant des moyens de solidarisation complémentaires coopérant avec des moyens de solidarisation de la platine de fixation (6). Le cintre support (7) est constitué de deux branches (8) s'étendant de part et d'autre d'une base hémi-annulaire (9) comportant dans sa partie inférieure au moins une fente (10) s'étendant sensiblement perpendiculairement auxdites branches (8), lesdites branches (8) étant diamétralement opposées.

Il est bien évident que les moyens de fixation (3) pourront consister dans tout autre moyen de fixation d'un écran plat bien connu de l'homme du métier sans pour autant sortir du cadre de l'invention.

Accessoirement, des butées (11) cylindriques obtenus dans un polymère ou similaire sont fixées sur la face arrière de l'écran plat (4) afin d'assurer d'une part la verticalité de l'écran (4), lesdites butées prenant appui sur la paroi verticale, telle qu'un mur par exemple, sur laquelle prend appui la colonne (2) et d'autre part la stabilité latérale dudit écran (4).

En référence aux figures 1 à 4, le piètement (1) présente une forme générale d'arc de cercle, une patte recourbée (12) s'étendant depuis le bord convexe dudit piètement (1) dans sa partie médiane. Dans cet exemple particulier de réalisation, le piètement (1) est constitué d'une plaque métallique (13) en forme d'arc de cercle et de deux patins anti-glisse (14) positionnés sous ladite plaque métallique (13) aux extrémités libres de cette dernière. Lesdits patins anti-glisse (14) consistent dans des patins en élastomère bien connus. De plus, la patte recourbée (12) présente un rayon de courbure formant un angle sensiblement égal à 90° avec la concavité orientée vers le haut et l'extrémité supérieure de ladite patte recourbée (12) comporte des trous (15) aptes à recevoir des goujons solidaires de la colonne (2) pour la solidarisation de la colonne (2) sur le piétement (1) comme il sera détaillé plus loin.

Il va de soi que le piètement (1) pourra présenter une forme quelconque et les patins anti-glisse (14) pourront être obtenus dans tout autre matériau présentant des propriétés anti-dérapantes sans pour autant sortir du cadre de l'invention.

Par ailleurs, en référence aux figures 1 à 4, la colonne (2) est constituée d'une plaque métallique (17) rectangulaire recourbée dans sa partie inférieure et pliée vers l'arrière à son extrémité supérieure pour former un méplat (18) parallèle à la colonne (2), la face arrière dudit méplat (18) recevant le patin adhérent (5). Dans cet exemple particulier de réalisation, ladite colonne (2) est constituée de deux parties, une première partie dite inférieure (2a) recourbée à son extrémité inférieure en présentant un rayon de courbure formant un angle sensiblement égal à 90° avec la concavité orientée vers le haut, et une seconde partie dite supérieure (2b) solidaire de l'extrémité supérieure de la partie inférieure (2a). L'extrémité inférieure de la partie inférieure (2a) est solidarisée à la patte recourbée (12) du piètement (1) au moyen d'écrous (16) coopérant avec des goujons (19) s'étendant depuis la face arrière de la partie inférieure (2a) de la colonne (2), lesdits goujons (19) traversant les trous (15) correspondants pratiqués dans la patte recourbée (12) du piètement (1) . La partie supérieure (2b) comporte des paires de trous (20) espacés à intervalles régulier le long de ladite partie supérieure (2b) de la colonne (2), ces paires de trous (20) étant destinées à recevoir des vis de fixation de la platine (6) des moyens de fixation (3) de l'écran (4) sur la colonne (2). De cette manière, un utilisateur peut librement adapter la hauteur de l'écran (4) sur la colonne (2).

Une telle configuration en deux parties de la colonne (2) permet un stockage du support d'écran suivant l'invention dans un carton d'emballage présentant un volume réduit. On notera que le système d'assemblage est particulièrement simple et rapide à mettre en oeuvre.

Il va de soi que la colonne (2) du support d'écran suivant l'invention pourra comporter un nombre quelconque de parties tel qu'une colonne d'un seul tenant ou une colonne en plus de deux parties, sans pour autant sortir du cadre de l'invention.

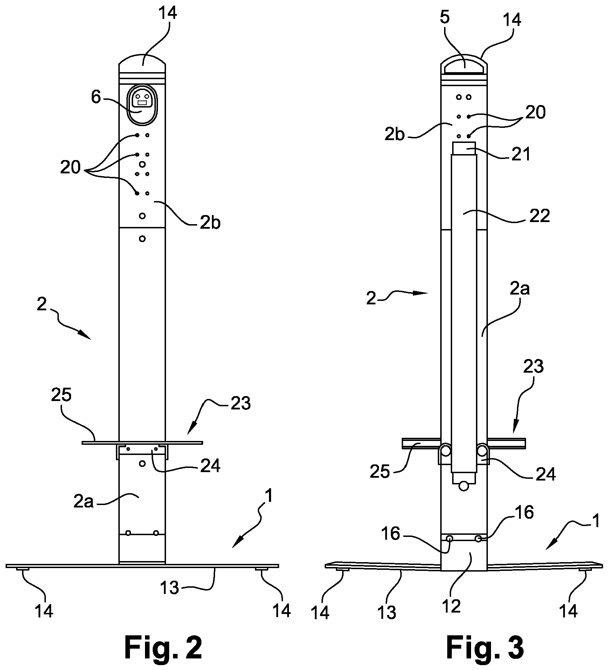

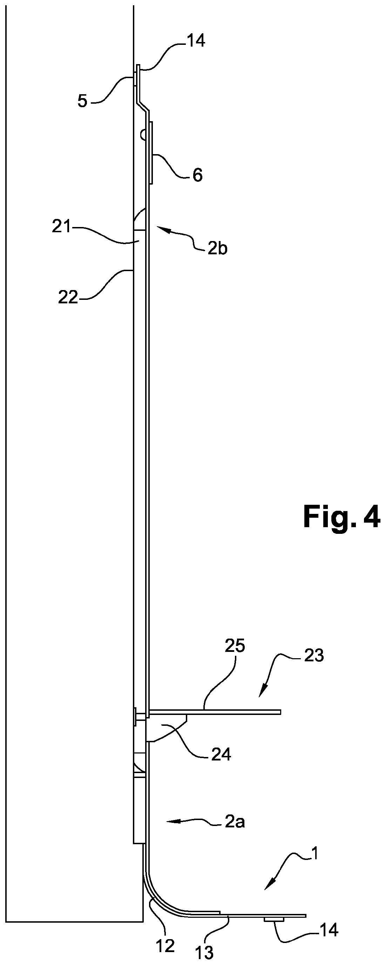

Par ailleurs, en référence aux figures 3 et 4, le support suivant l'invention comporte un raidisseur (21) solidaire de la face arrière de la colonne (2) afin d'assurer un assemblage de la partie inférieure (2a) avec la partie supérieure (2b) de la colonne (2) ainsi qu'une parfaite rigidité de la colonne (2), notamment lorsqu'un grand écran plat (4) est fixé sur ladite colonne (2). Ledit raidisseur (21) consiste en une pièce métallique profilée en forme de U fixée sur la face arrière des deux parties (2a,2b) la colonne (2) par tout moyen de fixation approprié, tel que par vis et écrou par exemple, et s'étendant depuis l'extrémité inférieure de la partie inférieure (2a) de la colonne (2) jusqu'à la partie médiane de la partie supérieure (2b) de ladite colonne (2). On notera que le raidisseur (21) pourra être solidarisé sur la face arrière des parties inférieure (2a) et supérieure (2b) de la colonne (2) par tous moyens appropriés bien connus de l'homme du métier tel que, par exemple, des goujons s'étendant depuis la face arrière des parties inférieure (2a) et supérieure (2) de la colonne (2) traversant des trous correspondants pratiqués dans le raidisseur (21) et coopérant avec des écrous.

De manière avantageuse, le support suivant l'invention comporte un capot (22) rectangulaire venant coiffer le raidisseur (21) pour former une goulotte dans laquelle sont aptes à passer les câbles électriques, vidéos, etc... de l'écran plat (4) de sorte que lesdits câbles électriques ne soient pas visibles. Le capot (22) est par exemple obtenu dans une matière plastique et coopère par déformation élastique avec les bords des branches du U formant le raidisseur (21).

Accessoirement, en référence aux figures 2 à 4, le support d'écran suivant l'invention comporte une tablette support (23) s'étendant horizontalement au dessus du piètement (1). Dans cet exemple particulier de réalisation, la tablette (23) est constituée d'une équerre (24) solidarisée, au moyen de vis et écrous par exemple, à proximité de l'extrémité inférieure de la partie inférieure médiane (2a) de la colonne (2), sur sa face avant, et d'un plateau (25) sensiblement rectangulaire prenant appui sur ladite équerre (24).

Cette tablette support (23) permet de recevoir un équipement audiovisuel tel qu'un lecteur de DVD ou similaire par exemple. On notera que, de manière avantageuse, l'extrémité inférieure du raidisseur (21) s'étend sensiblement au niveau de la tablette support (23) afin de faciliter les branchements des câbles électriques, vidéo, etc... avec l'équipement audiovisuel positionné sur ladite tablette (23).

Enfin, il est bien évident que les exemples que l'on vient de donner ne sont que des illustrations particulières, en aucun cas limitatives quant aux domaines d'application de l'invention.

## Revendications

1. Support d'écran plat (4) du type plasma, LCD ou similaire constitué d'au moins un piètement (1) comportant au moins deux appuis au sol et une colonne (2), dont l'extrémité supérieure comporte sur sa face avant, s'étendant au droit du piètement (1), des moyens de fixation (3) de l'écran plat (4). ***caractérisé* en ce que** le piètement (1) est constitué d'une plaque métallique (13) en forme d'arc de cercle et de deux patins anti-glisse (14) positionnés sous ladite plaque métallique (13) aux extrémités libres de cette dernière, ***en ce que*** la colonne (2) s'étend depuis le bord convexe dudit piètement (1) dans sa partie médiane, ***et en ce* que** la colonne (2) est constituée d'une plaque métallique rectangulaire recourbée dans sa partie inférieure et pliée vers l'arrière à son extrémité supérieure pour former un méplat (18) parallèle à la colonne (2), la face arrière dudit méplat (18) recevant un patin adhérent (5) apte à prendre appui sur une paroi verticale.

2. Support d'écran suivant la revendication 1, ***caractérisé* en ce que** la colonne (2) est constituée d'au moins deux parties, une partie inférieure (2a) recourbée solidarisée au piètement (1), et une partie supérieure (2c) solidaire de l'extrémité supérieure de la partie médiane (2b).

3. Support d'écran suivant l'une quelconque des revendications 1 ou 2, ***caractérisé* en ce qu'**il comporte un raidisseur (21) solidaire de la face arrière de la colonne (2).

4. Support d'écran suivant la revendication 3, ***caractérisé* en ce que** le raidisseur (21) consiste en une pièce profilée en forme de U.

5. Support d'écran suivant la revendication 4, ***caractérisé* en ce qu'**il comporte un capot (22) rectangulaire venant coiffer le raidisseur (21) pour former une goulotte dans laquelle sont aptes à passer les câbles électriques, vidéos, ou similaires de sorte que lesdits câbles électriques ne soient pas visibles.

6. Support d'écran suivant l'une quelconque des revendications 1 à 5, ***caractérisé* en ce que** le patin adhérent (4) consiste en un patin obtenu dans un gel élastomère, tel que du polyuréthane (PU), ou du polychlorure de vinyle (PVC), ou du silicone ou similaire.

7. Support d'écran suivant l'une quelconque des revendications 1 à 6, ***caractérisé* en ce que** les patins anti-glisse (14) consistent dans des patins en élastomère.

8. Support d'écran suivant l'une quelconque des revendications 1 à 7, ***caractérisé* en ce que** la colonne (2) comporte des paires de trous (20) espacés à intervalles régulier le long de ladite colonne, ces paires de trous (20) étant destinées à recevoir des vis de fixation des moyens de fixation (3) de l'écran (4) sur la colonne (2).

## Patentansprüche

1. Flachbildschirmhalter (4) vom Typ Plasma, LCD oder ähnlichem, bestehend aus mindestens einem Gestell (1), umfassend mindestens zwei Bodenstützen und eine Säule (2), deren oberes Endstück auf der Vorderseite, die sich rechts vom Gestell (1) erstreckt, Befestigungsmittel für den Flachbildschirm (4) enthält. ***dadurch gekennzeichnet, dass*** das Gestell (1) aus einer kreisbogenförmigen Metallplatte (13) besteht sowie aus zwei Anti-Rutsch-Stoppern (14), angeordnet unter dieser Metallplatte (13), an deren freien Endstücken ***und dadurch, dass*** die Säule (2) vom konvexen Rand dieses Gestells (1) im medianten Teil aus verläuft ***und dadurch, dass*** die Säule (2) aus einer rechteckigen Metallplatte besteht, die im unteren Teil gebogen und am oberen Ende nach hinten geknickt ist, so dass sie eine Abflachung (18) parallel zur Säule (2) bildet, die Rückseite dieser Abflachung (18) wird mit einem Haftschuh (5) versehen, der sich gegen eine vertikale Wand stützen kann.

2. Flachbildschirmhalter nach Anspruch 1, ***dadurch gekennzeichnet, dass*** die Säule (2) aus mindestens zwei Teilen besteht, einem unteren, gekrümmten Teil (2a), fest verbunden mit dem Gestell (1) und einem oberen Teil (2c), fest verbunden mit dem oberen Ende des medianen Teils (2b).

3. Flachbildschirmhalter nach irgendeinem der Ansprüche 1 oder 2, ***dadurch gekennzeichnet, dass*** er eine Aussteifung (21) umfasst, die fest verbunden ist mit der Rückseite der Säule (2).

4. Flachbildschirmhalter nach Anspruch 3, ***dadurch gekennzeichnet, dass*** die Aussteifung (21) aus einem U- förmigen Profilteil besteht.

5. Flachbildschirmhalter nach Anspruch 4, ***dadurch gekennzeichnet, dass*** er eine rechteckige Abdeckung (22) umfasst, die die Aussteifung (21) abdeckt und so eine Kabelrinne bildet, durch die die Elektro- Video- oder sonstigen Kabel geführt werden können, so dass diese Elektrokabel nicht sichtbar sind.

6. Flachbildschirmhalter nach irgendeinem der Ansprüche 1 bis 5, ***dadurch gekennzeichnet, dass*** es sich bei dem Haftschuh (4) um einen Schuh handelt, der aus einem Elastomergel geformt wurde, wie Polyurethan (PU) oder Polyvinylchlorid (PVC) oder Silikon oder ähnlichen.

7. Flachbildschirmhalter nach irgendeinem der Ansprüche 1 bis 6, ***dadurch gekennzeichnet, dass*** die Anti-Rutsch-Stopper (14) aus Elastomerschuhen bestehen

8. Flachbildschirmhalter nach irgendeinem der Ansprüche 1 bis 7, ***dadurch gekennzeichnet, dass*** die Säule (2) Lochpaare (20) umfasst, vorgesehen in regelmäßigem Abstand entlang dieser Säule, diese Lochpaare (20) dienen zur Aufnahme von Beschäftigungsschrauben der Befestigungsmittel (3) des Bildschirms (4) auf der Säule (2)

## Claims

1. A screen support for a flat screen (4) of the plasma, LCD or similar type constituted of at least one base (1) comprising at least two ground backings and a column (2), whose upper end comprises on its front face, extending perpendicular to the base (1), fastening means (3) for the flat screen (4), ***characterized in that*** the base (1) is constituted of a metal plate (13) with a circular arcuate shape and two non-slip pads (14) positioned under said metal plate (13) at the free ends thereof, ***in that*** the column (2) extends from the convex edge of said base (1) in its middle portion, ***and in that*** the column (2) is constituted of a rectangular metal plate curved in its lower part and folded rearward at its upper end to form a flat (18) parallel to the column (2), the rear face of said flat (18) receiving an adherent pad (5) adapted to bear on a vertical wall.

2. A screen support according to claim 1, ***characterized* in that** the column (2) is constituted of at least two portions, a curved lower portion (2a) that is secured to the base (1), and an upper portion (2c) that is secured to the upper end of the middle portion (2b).

3. A screen support according to any one of claims 1 or 2, ***characterized* in that** it is provided with a stiffener (21) that is secured to the rear face of the column (2).

4. A screen support according to claim 3, ***characterized* in that** the stiffener (21) consists in a U-shaped profile piece.

5. A screen support according to claim 4, ***characterized* in that** it comprises a rectangular cover (22) that comes to cover the stiffener (21) to form a channel in which electrical, video, or similar cables can pass so that said electrical cables are not visible.

6. A screen support according to any one of claims 1 to 5, ***characterized* in that** the adhesive pad (4) consists in a pad made of a gel of elastomer, such as polyurethane (PU), or polyvinyl chloride (PVC), or silicone or similar.

7. A screen support according to any one of claims 1 to 6, ***characterized* in that** the anti-slip pads (14) consist in elastomer pads.

8. A screen support according to any one of claims 1 to 7, ***characterized* in that** the column (2) is provided with pairs of holes (20) that are spaced apart at regular intervals along said column, said pairs of holes (20) being designed to receive fastening screws from the fastening means (3) of the screen (4) on the column (2).
